# EUROPÄISCHE PATENTSCHRIFT

(11) **EP 2 621 807 B1**
(45) Veröffentlichungstag und Bekanntmachung des Hinweises auf die Patenterteilung: **26.11.2014**
(21) Anmeldenummer: 11763659.7
(22) Anmeldetag: 29.09.2011
(51) Int. Cl.: B64D 27/04, B64D 27/10, B64D 27/02, B63H 21/20, F01D 15/04, F02B 37/10, F02B 37/16, F02B 63/00

(54) **DIESELMOTOREN/GASTURBINEN - VERBUNDTRIEBWERK FÜR EIN TRANSPORTMITTEL**
DIESEL ENGINE/GAS TURBINE COMPOUND ENGINE FOR A MEANS OF TRANSPORTATION
GROUPE MOTOPROPULSEUR COMPOUND MOTEUR DIESEL-TURBINE À GAZ POUR UN MOYEN DE TRANSPORT

(30) Priorität: 29.09.2010 DE 102010046850
(43) Veröffentlichungstag der Anmeldung: 07.08.2013
(73) Patentinhaber: Airbus Operations GmbH, 21129 Hamburg (DE)
(72) Erfinder: STÜCKL, Stefan, 80798 München (DE)
(74) Vertreter: Maiwald Patentanwalts GmbH
(86) Internationale Anmeldenummer: PCT/EP2011/066948
(87) Internationale Veröffentlichungsnummer: WO 2012/041941

(56) Entgegenhaltungen:
- EP-A2- 1 992 811
- CH-A- 231 639
- DE-C- 731 743
- DE-C- 836 870
- US-A- 3 576 101

## Beschreibung

### Technisches Gebiet

Die Erfindung betrifft ein Triebwerk in einem Transportmittel. Insbesondere betrifft die Erfindung ein Verbundtriebwerk, das einen Dieselmotor und eine Gasturbine aufweist, die Verwendung eines solchen Verbundtriebwerks in einem Transportmittel, Transportmittel mit einem solchen Verbundtriebwerk und Verfahren zum Antreiben eines Transportmittels mit einem solchen Verbundtriebwerk.

### Hintergrund der Erfindung

Sowohl Dieselantriebe als auch Gasturbinenantriebe finden im derzeitigen Stand der Technik Verwendung.

Die Dieseltechnologie ist als Antrieb bei Kraftfahrzeugen, bei Luftfahrzeugen und bei Schiffen weit verbreitet. Sie zeichnet sich durch einen hohen Wirkungsgrad aus, die Motoren weisen aber üblicherweise ein vergleichsweise hohes Gewicht auf. Insbesondere bei Luftfahrzeugen können sich aus der hohen Masse ein höherer Energieverbrauch und vermehrte Kosten ergeben.

Um die Leistung der Dieselmotoren zu steigern, kann zusätzlich ein Turbolader verwendet werden. Dieser besteht aus einer Abgasturbine, die die Energie der Abluft des Motors nutzt um einen Vorverdichter anzutreiben, der im Motor den Gemischdurchsatz pro Arbeitstakt und damit die Leistung des Motors erhöht. Turbolader sind insbesondere bei Kraftfahrzeugen bekannt und verbreitet.

Die Gasturbinentechnologie ist insbesondere bei Propellermaschinen im Einsatz, aber es werden beispielsweise auch Wellenleistungsturbinen in Turboprop-Flugzeugen, Hubschraubern und schweren Fahrzeugen, wie z.B. Panzern, verwendet. Ein Verfahren, eine solche Gasturbine zu betreiben, ist in WO 2009/040112 A2 beschrieben. Gasturbinen bestehen üblicherweise aus einem Verdichter, einer Brennkammer, wie sie beispielsweise in DE 103 43 049 B3 beschrieben wird, und einer Turbine.

CH 231 639 A beschreibt eine Flugzeugbrennkraftmaschine mit nachgeschalteter Abgasturbine, bei welcher eine Brennkammer von einem Lader Luft zugeführt und das erzeugte Treibgas zur Erhöhung der Leistung der Abgasturbine zugeleitet werden kann.

DE 836 870 C beschreibt eine Brennkraftmaschinenanlage, die insbesondere zum Antrieb von Flugzeugen geeignet ist, wobei die Kraftanlage eine Zweitaktbrennkraftmaschine aufweist, welche einen Zentrifugalkompressor antreibt, der der Brennkraftmaschine ständig unmittelbar Luft zuführt.

EP 1 992 811 A2 beschreibt ein Verbundtriebwerk für ein Luftfahrzeug, welches eine Turbine mit einem Abgaskrümmer aufweist, wobei von dem Abgaskrümmer Fluide zu der Turbine und einem Luftkompressor umgeleitet werden können.

DE 731 743 C beschreibt eine mit Gleichdruckverbrennung arbeitende Brennkraftturbine, die den ihr zugehörigen, die Verbrennungsluft liefernden Verdichter selbst antreibt.

US 3,576,101 A beschreibt eine Turbine mit einem Lufteinlass, der zumindest ein Auslassrohr teilweise umgibt, um eine Wärmeleitung zwischen den vergleichsweise heißen Abgasen und der vergleichsweise kühlen eingelassenen Luft zu ermöglichen.

Der Wirkungsgrad der Gasturbine hängt vom Betriebspunkt bzw. vom Lastpunkt ab.

### Zusammenfassung der Erfindung

Es kann als Aufgabe der Erfindung gesehen werden, einen verbrauchseffizienteren Antrieb für ein Transportmittel bereitzustellen.

Die Aufgabe wird gelöst durch die Gegenstände der unabhängigen Ansprüche, wobei beispielhafte Ausgestaltungen in den abhängigen Ansprüchen verkörpert sind.

Gemäß einem ersten Aspekt der Erfindung weist das Verbundtriebwerk einen Dieselmotor und eine Gasturbine auf, wobei Dieselmotor und Gasturbine derart miteinander verbunden sind und zusammenwirken, dass ein Teil der Gasturbine als Turbolader für den Dieselmotor verwendet werden kann.

Dies hat den Vorteil, dass das Verbundtriebwerk sowohl Spitzenlastanforderungen, beispielsweise beim Start eines Flugzeugs, als auch Dauerlastanforderungen, beispielsweise im Reiseflug eines Flugzeugs, erfüllen kann. Durch die gemeinsame Nutzung von Systemkomponenten durch Gastriebwerk und Dieselmotor, insbesondere von einem oder mehreren Verdichtern und einer oder mehrerer Turbinen, können Gewicht und damit auch Material, Energie und Kosten eingespart werden. Insbesondere ist der Antrieb verbrauchseffizient.

Statt des in Anspruch 1 benannten Dieselmotors kann auch ein anderer Kolbenmotor verwendet werden, also beispielsweise auch ein Otto- oder ein Gasmotor. Es können einzelne oder mehrere Gasturbinen mit einzelnen oder mehreren Dieselmotoren kombiniert werden und es können einzelne oder mehrere Verdichter und einzelne oder mehrere Turbinen als Teil des Turboladers für den Dieselmotor verwendet werden. Dies kann vorteilhaft sein, damit es möglich ist, im System redundante Antriebskomponenten bereitzustellen.

Gasturbinen weisen ein deutlich besseres Leistungsgewicht als Dieselmotoren auf. Daher werden sie insbesondere bei Spitzenlastanforderungen eingesetzt. Im Grundlastbetrieb, beispielsweise im Reiseflugverkehr eines Passagierflugzeugs, ist eine Gasturbine jedoch weniger effizient als ein Dieselmotor.

Während daher für kurzzeitige Spitzenlasten die Gasturbinentechnologie besser geeignet ist, sind für den Grundlastbetrieb im Reiseverkehr die effizienten, aber schweren Dieselmotoren besser geeignet.

Die Turbine kann zur Leistungssteigerung des Antriebs zusätzlich zu dem Dieselmotor hinzugeschaltet werden. Dabei kann das Abgas des Dieselmotors von einer oder mehreren Nutzturbinen weiter verwendet werden.

Gemäß einer beispielhaften Ausführungsform weist die Gasturbine des Verbundtriebwerks mindestens zwei separate Verdichter und zwei Turbinen auf. Dabei sind Verdichter und Turbinen auf separaten Wellen parallel geschaltet und mindestens ein Verdichter und eine Turbine kann als Teil des Turboladers für den Dieselmotor dienen. Im Turbolader-System sind üblicherweise die Luftmassenströme durch das System, und insbesondere durch Verdichter und Turbine, wesentlich geringer als bei einer Gasturbine. Eine Gasturbine kann beispielsweise einen Luftmassenstrom von 7 kg/s aufweisen, der Dieselmotor im Turbolader-Betrieb einen Luftmassenstrom von 1 kg/s benötigen. Um geringere Luftmassenströme bereit zu stellen, können entsprechende Drosselventile verwendet werden. Auch die Drehzahlen unterscheiden sich, je nachdem, in welchem Betrieb Verdichter und Turbine laufen. Im Turbolader-Betrieb wird ca. ein Drittel der maximalen Drehzahl benötigt. Im Gasturbinenmodus kann die Drehzahl beispielsweise 14000 RPM betragen, im Turbolader-Betrieb 4700 RPM.

Gemäß einer beispielhaften Ausführungsform weist die Gasturbine eine gemeinsame Brennkammer für die Turbinen auf. Eine gemeinsame Nutzung erspart dem System wiederum Gewicht, Material und Kosten. Es ist jedoch auch möglich, beispielsweise um redundante Systeme zu erzeugen, dass mehrere Brennkammern eingebaut werden. Dabei ist es möglich, dass jeweils ein Verdichter und eine Turbine über eine Brennkammer verbunden sind, oder auch, dass einige Verdichter und Turbinen separate Brennkammern besitzen und andere Verdichter und Turbinen sich eine gemeinsame Brennkammer teilen.

Gemäß einer beispielhaften Ausführungsform wird im Spitzenlastbetrieb das Verbundtriebwerk über die Gasturbine betrieben. Das hat den Vorteil, dass der Luftmassendurchsatz des Gastriebwerks im Spitzenlastbetrieb hoch ist und der Antrieb damit gewichtseffizient betrieben werden kann. Der Dieselmotor kann in diesem Betrieb abgeschaltet sein, als Saugmotor ohne Turbolader mitlaufen oder mit Zapfluft aus der Niederdruckturbine aufgeladen werden. Im Spitzenlastbetrieb kann also die Gasturbine alleine betrieben werden. Alternativ können Gasturbine und Dieselmotor gleichzeitig verwendet werden.

Gemäß einer beispielhaften Ausführungsform wird im Dauerlastbetrieb das Verbundtriebwerk lediglich über den Dieselmotor betrieben, wobei mindestens ein Verdichter und mindestens eine Turbine als Teil des Turboladers für den Dieselmotor verwendet werden können. Im Dauerlastbetrieb kann also der Dieselmotor alleine oder der Dieselmotor mit einem Teil der Gasturbine als Turbolader betrieben werden. Damit ist das Verbundtriebwerk über den Dieselmotor oder die Gasturbine betreibbar. Durch die Vorverdichtung durch den Turbolader reduziert sich die Verdichtung durch den Kolben des Motors und der damit benötigte Hub, die Masse und der Bauraum des Dieselmotors.

Wird das Verbundtriebwerk über den Dieselmotor alleine betrieben, unterscheiden sich die Luft- und Abgasmasseströme im Vergleich zu einem kombinierten Antrieb über Dieselmotor und Gasturbine sowie im Vergleich zu einem reinen Antrieb über die Gasturbine. Dieser Unterschied in den Luft- und Abgasmasseströme bei den verschiedenen Betriebsarten wird verursacht durch die unterschiedliche Stöchiometrie im Verbrennungsvorgang von Dieselmotor und Gasturbine, d.h. durch das unterschiedliche Verhältnis von Luft zu Kraftstoff beim Dieselmotor bzw. bei der Gasturbine.

Insbesondere im Fall geringer Luftmassenströme bei Betrieb des Verbundtriebwerks über den Dieselmotor kann es vorteilhaft sein, die Abgase des Dieselmotors nicht durch alle Komponenten der Gasturbine zu führen, da ein geringer Luftmassenstrom, der mehrere Verdichter und Turbinen durchläuft, d.h. dass für den Dieselmotor mehrere Gasturbinen als Turbolader genutzt werden, eine lediglich geringe Verdichtung erzielen mag, womit sich im Dieselmotorbetrieb mit Turbolader eine lediglich geringe Leistungssteigerung zeigt. Dies bedeutet, dass die Verwendung eines einzelnen Verdichters und einer einzelnen Turbine als Turbolader für den Dieselmotor zu einer hohen Verdichtung der Luft und damit zu einer erhöhten Leistungssteigerung des Dieselmotors führen kann.

Die Gasturbine kann beispielsweise einen mehrstufigen Verdichter aufweisen, von dem lediglich ein Teil, insbesondere eine Verdichterstufe, als Turbolader für den Dieselmotor genutzt wird.

Gemäß einer beispielhaften Ausführungsform weist das Verbundtriebwerk Sperrventile auf, die beispielsweise zur Regelung der Frischluftzufuhr, zur Regelung der Gaszufuhr in die Brennkammer, zur Regelung der Gaszufuhr zu den Turbinen. Im Spitzenlastbetrieb sind die Sperrventile geöffnet und ermöglichen das Betreiben jeden Verdichters und jeder Turbine, im Dauerlastbetrieb ermöglichen die Ventile nur das Betreiben derjenigen Verdichter und derjenigen Turbinen, die als Turbolader für den Dieselmotor dienen.

Gemäß einer beispielhaften Ausführungsform weist das Verbundtriebwerk eine erste Abtriebswelle, eine erste Kupplung, ein erstes Getriebe, ein zweites Getriebe und eine Hauptabtriebswelle auf, wobei die erste Abtriebswelle der Gasturbine über das erste Getriebe, über die erste Kupplung und über das zweite Getriebe mit der Hauptabtriebswelle verbunden ist.

Gemäß einer beispielhaften Ausführungsform weist das Verbundtriebwerk weiterhin eine zweite Abtriebswelle und eine zweite Kupplung auf, wobei die zweite Abtriebswelle des Dieselmotors über die zweite Kupplung mit dem zweiten Getriebe verbunden ist und das zweite Getriebe mit der Hauptabtriebswelle verbunden ist.

Die Abtriebswellen von Gasturbine und Dieselmotor laufen mit unterschiedlichen Drehzahlen und die mechanische Leistung jeder Welle kann über die jeweiligen Getriebe auf eine gemeinsame Hauptabtriebswelle gebracht werden. Ist nur die Gasturbine oder der Dieselmotor in Betrieb, kann die Abtriebswelle der inaktiven Komponente mittels einer Kupplung vom Getriebe getrennt werden. Dies ist außerdem aus Gründen der Sicherheit vorteilhaft, weil durch die entsprechenden Kupplungen jederzeit die Komponenten vom Getriebe getrennt werden können.

Gemäß einer beispielhaften Ausführungsform weist das Verbundtriebwerk weiterhin eine dritte Kupplung auf, wobei eine für den Turbolader verwendete Turbine durch die dritte Kupplung vom ersten Getriebe getrennt werden kann.

Wenn ein Teil der Gasturbine als Turbolader für den Dieselmotor verwendet wird, wird dieser Teil durch entsprechende Kupplungen und Ventile aus dem Betrieb der Gasturbine ausgekoppelt. Dadurch ist auch ein gleichzeitiger Betrieb des Dieselmotors mit Turbolader und dem Rest der Gasturbine möglich.

Gemäß einer beispielhaften Ausführungsform ist die Gasturbine seriell im Sinne eines klassischen Mehrwellentriebwerks geschaltet, wobei die Gasturbine Hoch- und Niederdruckturbinen sowie Hoch- und Niederdruckverdichter aufweist, wobei Niederdruckverdichter und -turbine bzw. Hochdruckverdichter und -turbine auf separaten Wellen laufen. Dies hat den Vorteil, dass Nieder- und Hochdruckturbinen mit unterschiedlichen Drehzahlen laufen können. Wahlweise kann auf einer weiteren separaten Welle eine Arbeitsturbine nachgeschaltet sein. Die separaten Wellen können einzeln ausgeführt oder in einer Hohlwelle zusammengefasst sein. Die Turbinen und Verdichter können in separaten Bauteilen ausgeführt oder in einem gemeinsamen Gehäuse integriert sein.

Die kleineren Abmessungen des Hochdruckteils im Vergleich zum Niederdruckteil der Gasturbine ermöglichen den Betrieb mit niedrigeren Luftmassenströmen für den Turbolader im Dieselbetrieb. Da die Strömungsverhältnisse in beiden Betriebsarten ähnlich sind, kann der Teil der Gasturbine, der im Hochdruckbereich läuft, als Turbolader für den Dieselbetrieb verwendet werden, während der Teil der Gasturbine, der im Niederdruck arbeitet, nicht für den Turbolader verwendet wird. Die Arbeitsturbine kann im Turbolader-Betrieb wahlweise mitlaufen und Restenergie der Abgasluft nutzen. In diesem Fall wird das Getriebe nicht durch eine Kupplung von der Arbeitsturbine getrennt. Der Hochdruckteil kann für einen gemeinsamen Arbeitspunkt ausgelegt werden. Dieser Arbeitspunkt kann durch eine Leitradverstellung an die jeweilige Betriebsart angepasst werden.

Gemäß einer beispielhaften Ausführungsform weist das Verbundtriebwerk Generatoren auf, welche die Kupplungen und mechanischen Getriebe zumindest teilweise ersetzen. Beispielsweise sind keine Kupplungen und mechanische Getriebe vorgesehen, sondern stattdessen elektrische Getriebe, die über Generatoren elektrische Arbeit erzeugen. Die Nutzleistung an den Abtriebswellen kann also nicht nur mechanisch, sondern auch elektrisch genutzt werden. Die Generatoren wandeln die mechanische Leistung der jeweiligen Abtriebswellen in elektrische Leistung um und diese kann mit Hilfe von Leistungselektronik, beispielsweise einem Leistungsregler, als elektrischer Antrieb verwendet werden oder auch in ein Verbrauchernetz eingespeist werden.

Gemäß einer beispielhaften Ausführungsform wird das Verbundtriebwerk in einem Transportmittel verwendet. Genauso kann das Verbundtriebwerk in einem stationären System verwendet werden, falls zum Beispiel dieses System Grundlastals auch Spitzenlastanforderungen benötigt und Gewichtseinsparung eine Rolle spielt.

Gemäß einem zweiten Aspekt der Erfindung ist ein Transportmittel mit einem Verbundtriebwerk bereitgestellt, wobei es sich bei dem Transportmittel um ein Flugzeug, einen Helikopter, einen Senkrechtstarter oder ein Wasserfahrzeug handeln kann oder auch um ein anderes Transportmittel, bei dem der Unterschied zwischen Grundlast- und Spitzenlastbedarf entsprechend hoch ist.

Gemäß einem dritten Aspekt der Erfindung ist ein Verfahren zum Antreiben eines Transportmittels bereitgestellt, welches beispielhaft die folgenden Schritte aufweist: Vom Antreiben eines Transportmittels mit einer Gasturbine, wobei gleichzeitig der Dieselmotor betrieben werden kann, wird umgeschaltet auf den Antrieb des Transportmittels mit einem Dieselmotor. Beim Antrieb des Transportmittel mit einem Dieselmotor kann ein Teil der Gasturbine als Turbolader für den Dieselmotor genutzt werden.

Gemäß einem vierten Aspekt der Erfindung ist ein Verfahren zum Antreiben eines Transportmittels bereitgestellt, welches beispielhaft die folgenden Schritte aufweist: Vom Antreiben eines Transportmittels mit einem Dieselmotor, wobei ein Teil des Gastriebwerks als Turbolader genutzt werden kann, wird umgeschaltet auf den Antrieb des Transportmittels mit einer Gasturbine. Anschließend kann der Antrieb des Transportmittels mit einer Gasturbine erfolgen, wobei gleichzeitig der Dieselmotor betrieben werden kann.

### Kurze Beschreibung der Figuren

Beispielhafte Ausführungsformen werden im Folgenden mit Bezugnahme auf die folgenden Zeichnungen beschrieben.
Figur 1 zeigt schematisch ein Verbundtriebwerk 100, das eine Gasturbine 101 und einen Dieselmotor 16 aufweist, wobei ein Teil der Gasturbine 101 als Turbolader 102 für den Dieselmotor 16 dienen kann.
Figur 2 zeigt ein Schaltbild für eine parallele Anordnung von Verdichtern 11, 12 und Turbinen 17, 18.
Figur 3 zeigt ein Schaltbild für eine serielle Anordnung von Verdichtern 301, 302 und Turbinen 303, 304 mit einer Arbeitsturbine 305.
Figur 4 zeigt ein Schaltbild für eine serielle Anordnung von Verdichtern 301, 302 und Turbinen 303, 304 ohne der Arbeitsturbine 305.
Figur 5 zeigt eine weitere beispielhafte Ausführungsform mit elektrischem Getriebe 501, 502. Über einen Leistungsregler 503 kann die erzeugte elektrische Energie auch in ein Verbrauchernetz über eine entsprechende Leitung 504 eingespeist werden.
Figur 6 zeigt ein Blockschaltbild eines Verfahrens zum Antreiben eines Transportmittels und das Umschalten von einem Antrieb zu einem anderen Antrieb eines Transportmittels.
Figur 7 zeigt ein Blockschaltbild eines Verfahrens zum Antreiben eines Transportmittels und das Umschalten von einem Antrieb zu einem anderen Antrieb eines Transportmittels.
Figur 8 zeigt ein Flugzeug 800 mit Verbundtriebwerken 100.
Figur 9 zeigt einen Helikopter 900 mit einem Verbundtriebwerk 100.

### Detaillierte Beschreibung von Ausführungsbeispielen

Die Darstellung in den Figuren ist schematisch und nicht maßstäblich. Für die gleichen oder ähnlichen Elemente werden die gleichen Bezugsziffern verwendet.

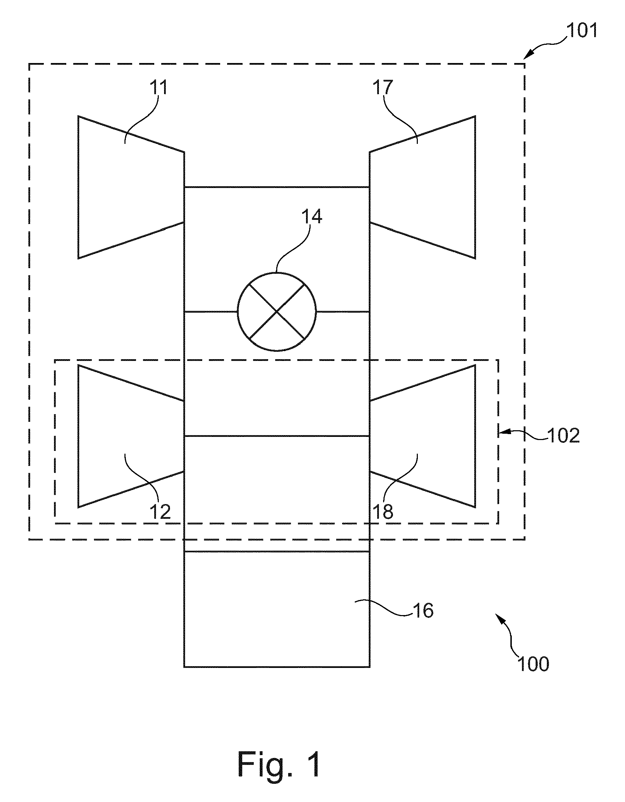

Figur 1 zeigt schematisch ein Verbundtriebwerk 100, das eine Gasturbine 101 und einen Dieselmotor 16 aufweist, wobei ein Teil der Gasturbine 101 als Turbolader 102 für den Dieselmotor 16 dienen kann. Die Brennkammer 14 kann eine gemeinsame Brennkammer für die Verdichter 11, 12 und die Turbinen 17, 18 sein, oder es können mehrere Brennkammern verwendet werden.

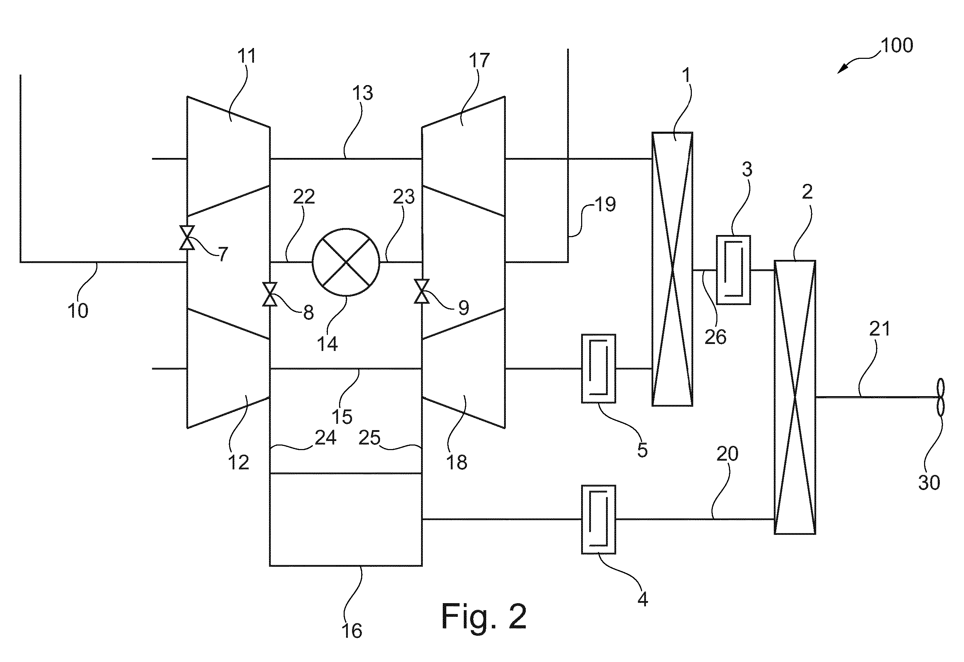

Figur 2 zeigt ein Schaltbild für ein Verbundtriebwerk 100 für eine parallele Anordnung von Verdichtern 11, 12 und Turbinen 17, 18 und einen Dieselmotor 16 sowie mechanische Getriebe 1, 2. Der Verdichter 11 und die Turbine 17 sitzen dabei auf einer Welle 13, der Verdichter 12 und die Turbine 18 sitzen auf einer weiteren Welle 15 und der Dieselmotor sitzt ebenso auf einer eigenen Welle 20.

Beim dargestellten Konzept wird Luft über die Frischluftzufuhr 10 in die Verdichter 11, 12 geleitet, wo diese verdichtet wird. Von dort aus kann sie über eine Leitungsanordnung 22 in die Brennkammer 14 gelangen, wo das Gas erhitzt wird. Mittels einer Leitungsanordnung 23 gelangt das erhitzte Gas von der Brennkammer 14 in die Turbinen 17, 18, durch welche ein Drehmoment für die jeweilige Welle 13, 15 erzeugt wird. Über eine Abgasführung 19 gelangt das Abgas aus dem System.

Es ist möglich, dass die jeweiligen Leitungsanordnungen und die Abgasführung von den Komponenten beider Wellen gemeinsam genutzt werden und es ist ebenso möglich, dass die jeweiligen Leitungen und Führungen für jede Welle separat ausgeführt sind.

Die Wellen 13, 15 sind an ein erstes Getriebe 1 gekoppelt, wobei die Welle 15 im Turbolader-Betrieb durch eine Kupplung 5 vom Getriebe 1 losgekoppelt werden kann. Der Dieselmotor 16 kann durch eine Leitungsanordnung 25 an eine der Turbinen 18 angeschlossen werden, die im Turbolader-Betrieb die Energie des Abgases nutzt um über Welle 15 einen Verdichter 12 anzutreiben, der über Leitungsanordnung 24 dem Dieselmotor 16 vorverdichtete Luft zuführen kann. Über die Ventile 7, 8, 9 kann der Luftkreislauf gegenüber dem nicht genutzten Teil der Gasturbine geschlossen werden. Der Dieselmotor 16 läuft auf einer Kurbelwelle 20, die an ein Getriebe 2 gekoppelt ist und die über eine Kupplung 4 vom Getriebe 2 losgekoppelt werden kann. Das Getriebe 2 wiederum ist mit einer Hauptabtriebswelle 21 verbunden, die beispielsweise einen Propeller 30 antreiben kann.

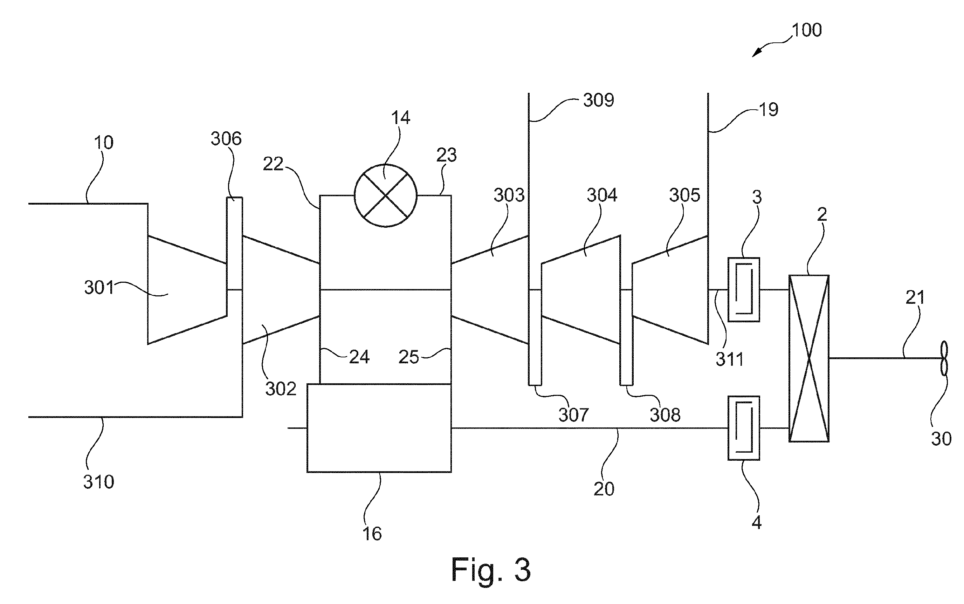

Figur 3 zeigt ein Schaltbild für ein Verbundtriebwerk 100 für eine serielle Anordnung von Verdichtern 301, 302 und Turbinen 303, 304, 305 und einen Dieselmotor 16 sowie ein mechanisches Getriebe 2. Dabei weist diese Anordnung einen Niederdruckverdichter 301, einen Hochdruckverdichter 302, eine Hochdruckturbine 303, eine Niederdruckturbine 304 und eine Arbeitsturbine 305 auf. Niederdruckverdichter 301 und Niederdruckturbine 304 befinden sich auf einer Welle, Hochdruckverdichter 302 und Hochdruckturbine 303 befinden sich auf einer weiteren Welle, und die Arbeitsturbine 305 befindet sich auf einer weiteren Welle.

Die separaten Wellen werden durch eine Welle 311 dargestellt. Dies kann beispielsweise durch eine Hohlwelle realisiert sein. Luft wird über eine Frischluftzufuhr 10 in den Niederdruckverdichter 301 geleitet, wo diese vorverdichtet wird. Über die Leitungsanordnung 306 gelangt die vorverdichtete Luft in den Hochdruckverdichter 302, der die Luft weiter verdichtet. Über Leitung 22 gelangt die verdichtete Luft in die Brennkammer 14, wo sie erhitzt wird, und über Leitung 23 gelangt sie in die Hochdruckturbine 303, weiterhin über eine Leitungsanordnung 307 in die Niederdruckturbine 304 und über eine weitere Leitungsanordnung 308 in die Arbeitsturbine 305, wo jeweils durch Entnahme von Energie aus dem erhitzten Gas ein Drehmoment erzeugt wird. Eine Abgasführung 309 führt das Abgas von der Hochdruckturbine aus dem System, eine Abgasführung 19 führt das Abgas von der Arbeitsturbine aus dem System. Die Niederdruckturbine kann ebenfalls eine Abgasführung aufweisen.

Wenn die Arbeitsturbine läuft, ist nur die Abgasführung 19 offen und die Abgasführung 309 geschlossen. Über eine Kupplung 3 ist die Welle 311 mit dem Getriebe 2 verbunden. Der Dieselmotor 16 ist über die Kurbelwelle 20 über die Kupplung 4 mit dem Getriebe 2 verbunden, das wiederum mit der Hauptabtriebswelle 21 verbunden ist. Verdichter 302 und Turbine 303 der Gasturbine, die unter Hochdruck arbeiten, können als Teile des Turboladers 102 dienen. Der Dieselmotor 16 kann durch eine Leitung 25 an eine der Turbinen 303 angeschlossen werden, die die Energie des Abgases nutzt um über die Welle 311 einen Verdichter 302 anzutreiben, der über die Leitung 24 dem Dieselmotor 16 vorverdichtete Luft zuführen kann. Die Frischluft für den Verdichter 302 kommt in diesem Fall aus einer Frischluftzuführung 310, da im Turbolader-Betrieb die Frischluftzuführung 10 über ein entsprechendes Ventil geschlossen wird.

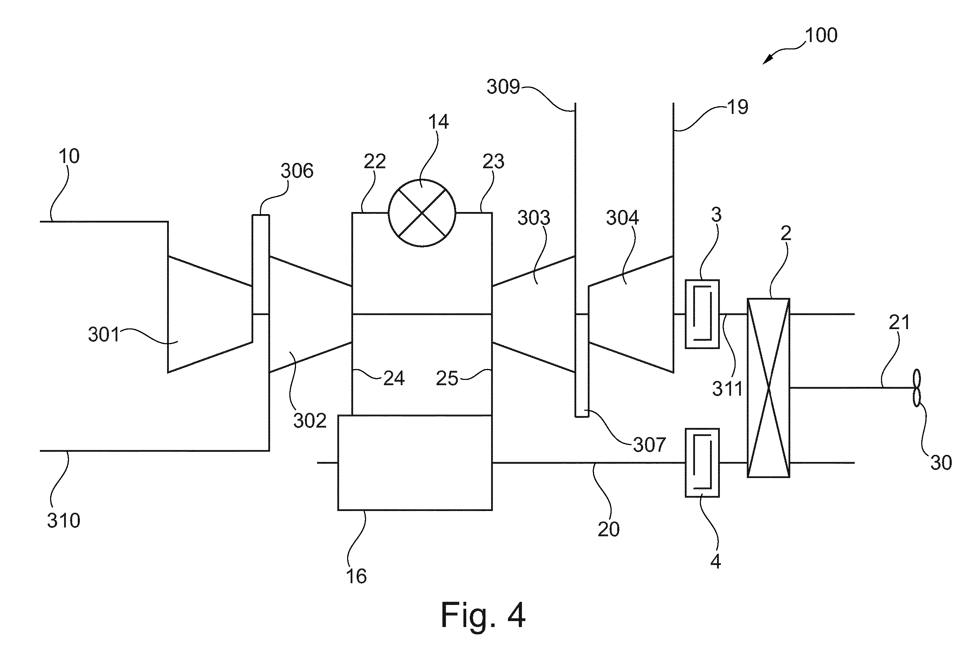

Figur 4 zeigt die Anordnung der Figur 3 ohne Arbeitsturbine. In diesem Fall wird die Abluft über die Abgasführung 19 an der Niederdruckturbine 304 aus dem System geführt statt an der Arbeitsturbine 305.

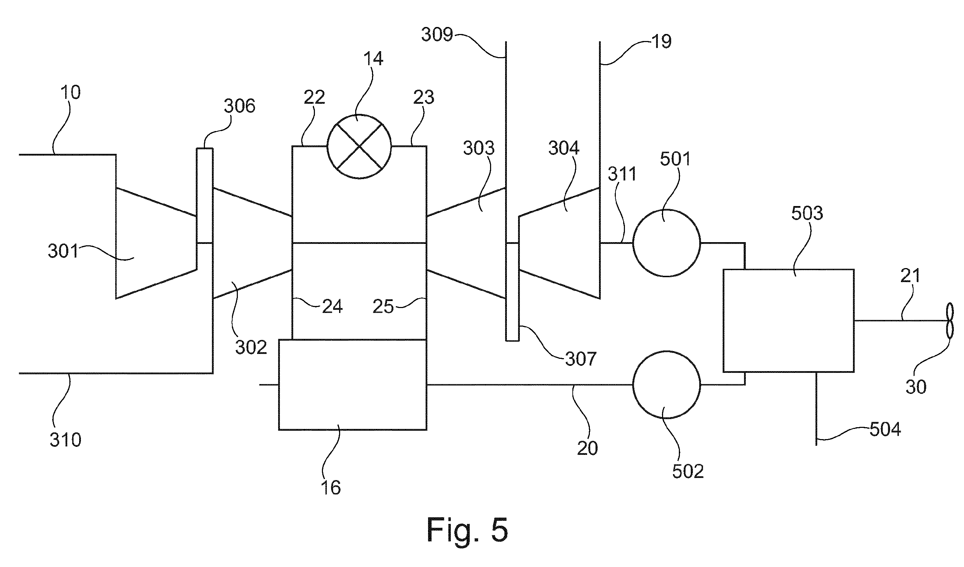

Figur 5 zeigt die Anordnung der Figur 4 ohne mechanisches Getriebe 2 und stattdessen mit Generatoren 501, 502, wobei die durch die Generatoren erzeugte elektrische Energie als Antrieb der Hauptabtriebswelle 21 dienen kann oder über eine Leitung 504 in ein Verbrauchernetz eingespeist werden kann. Ein Leistungsregler 503 kann dazu dienen, die elektrische Energie aus den Generatoren, die bei unterschiedlicher Drehzahl, Spannung und Frequenz laufen können, zu einer gemeinsamen Spannung und Frequenz zusammenzuführen.

Zur Rückwandlung in mechanische Energie kann ein separater Elektromotor vorgesehen sein.

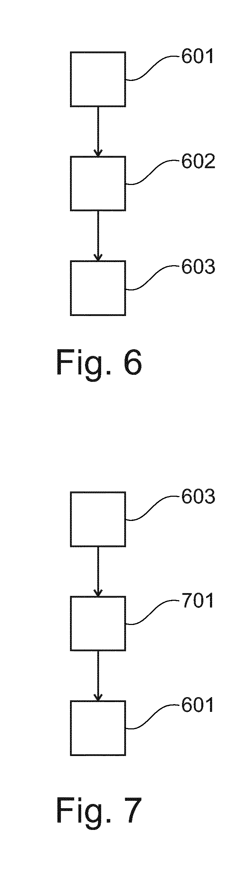

Figur 6 zeigt ein Blockschaltbild eines Verfahrens zum Antreiben eines Transportmittels und das Umschalten von einem Antrieb zu einem anderen Antrieb eines Transportmittels. In Schritt 601 erfolgt das Antreiben eines Transportmittels mit einer Gasturbine, wobei der Dieselmotor mitlaufen kann. In Schritt 602 erfolgt ein Umschalten von der Gasturbine auf den Dieselmotor. In Schritt 603 erfolgt das Antreiben des Transportmittels mit dem Dieselmotor, wobei ein Teil der Gasturbine als Turbolader für den Dieselmotor verwendet werden kann bzw. verwendet wird.

Figur 7 zeigt ein Blockschaltbild eines Verfahrens zum Antreiben eines Transportmittels, bei dem in Schritt 603 das Antreiben des Transportmittels mit einem Dieselmotor erfolgt, wobei ein Teil der Gasturbine als Turbolader für den Dieselmotor verwendet werden kann. In Schritt 701 erfolgt das Umschalten von dem Dieselmotor auf die Gasturbine. In Schritt 601 erfolgt dann das Antreiben des Transportmittels mit einer Gasturbine, wobei der Dieselmotor mitlaufen kann.

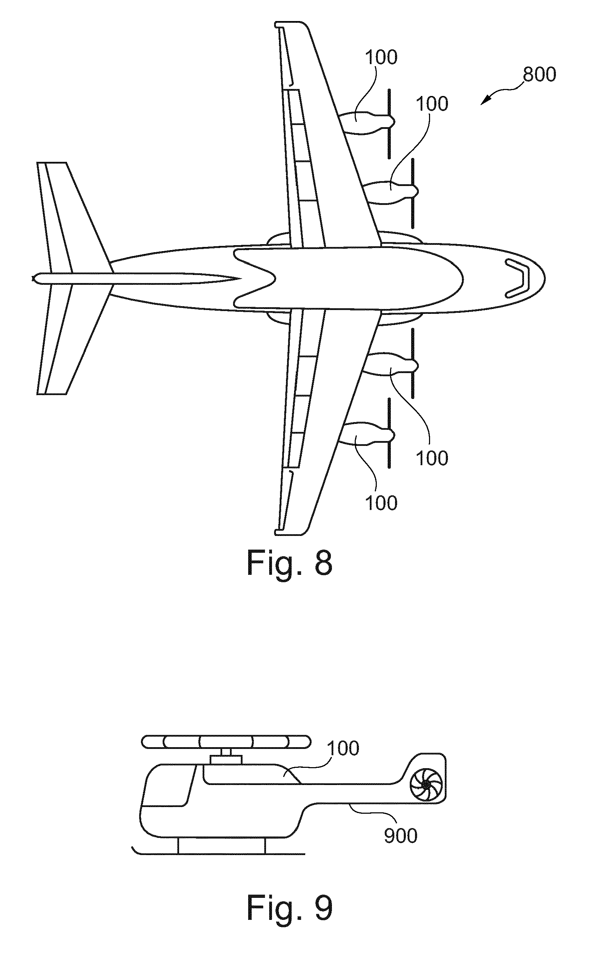

Figur 8 zeigt ein Flugzeug 800 mit mehreren Verbundtriebwerken 100.

Figur 9 zeigt einen Helikopter 900 mit einem Verbundtriebwerk 100, wobei das Verbundtriebwerk 100 ganz oder teilweise direkt am Rotor, unter oder im Helikopter untergebracht sein kann.

Im Folgenden werden beispielhafte Rahmendaten wiedergegeben:

| **Diesel** | **Gasturbine** |
|---|---|
| 500 kW mechanisch | **PW 120** |
| 40% Wirkungsgrad | 4 g/kW Luftmassenstrom |
| 1250 kW thermisch | |
| 42500 kJ/kg Energiegehalt Diesel | 8.88 e-05 kg/kW/s Spitzenlast SFC (specific fuel consumption) |
| 30 g/s Kraftstoffmassenstrom | 26.5% Wirkungsgrad |
| 14.5 kg/kg Luftbedarf Dieselkraftstoff | |
| 0.426 kg/s stöch. Luftmassenstrom | **PW 127** |
| 1 kg/s Luftmassenstrom bei λ= 2 | 7.1 kg/s Luftmassenstrom |
| Verdichtungsverhältnis 1:23 | Verdichtungsverhältnis 1:16 |

Es sei angemerkt, dass der Begriff "umfassend" weitere Elemente oder Verfahrensschritte nicht ausschließt, ebenso wie der Begriff "ein" und "eine" mehrere Elemente und Schritte nicht ausschließt. Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Verbundtriebwerk (100), welches als Antrieb für ein Transportmittel betreibbar ist, das Verbundtriebwerk aufweisend:
einen Kolbenmotor (16), beispielsweise einen Dieselmotor (16),
eine Gasturbine (111) mit mindestens einem Verdichter (11, 12) und mindestens einer Turbine (17, 18),
wobei Kolbenmotor (16) und Gasturbine (111) derart verbunden sind, dass in einem Dauerlastbestrieb das Verbundtriebwerk lediglich über den Kolbenmotor betrieben wird und der Kolbenmotor wahlweise alleine oder mit einem Verdichter (12) und einer Turbine (18) der Gasturbine als Turbolader (102) für den Kolbenmotor (16) betrieben wird,
wobei das Verbundtriebwerk über den Kolbenmotor (16) oder die Gasturbine (101) betreibbar ist.

2. Verbundtriebwerk (100) nach Anspruch 1,
wobei die Gasturbine (101) zwei separate Verdichter (11, 12) und zwei Turbinen (17, 18) aufweist.

3. Verbundtriebwerk (100) nach Anspruch 2, weiterhin aufweisend:
eine gemeinsame Brennkammer (13) für die zwei Turbinen (17, 18).

4. Verbundtriebwerk (100) nach einem der vorhergehenden Ansprüche,
wobei in einem Spitzenlastbetrieb das Verbundtriebwerk (100) lediglich über die Gasturbine (101) betrieben wird oder der Kolbenmotor (16) als Saug- oder Ladermotor mitläuft.

5. Verbundtriebwerk (100) nach einem der vorhergehenden Ansprüche,
wobei das Verbundtriebwerk (100) ein Sperrventil (7, 8, 9) zur Regelung der Frischluftzufuhr, zur Regelung der Gaszufuhr in die Brennkammer oder zur Regelung der Gaszufuhr zu einer der Turbinen (17, 18) aufweist;
wobei das Sperrventil (7, 8, 9) im Spitzenlastbetrieb geöffnet ist und im Dauerlastbetrieb nur das Betreiben derjenigen Turbine (18) ermöglicht, die als Turbolader (102) für den Kolbenmotor (16) dient.

6. Verbundtriebwerk (100) nach einem der vorhergehenden Ansprüche, weiterhin aufweisend:
eine erste Abtriebswelle (26);
eine erste Kupplung (3);
ein erstes Getriebe (1);
ein zweites Getriebe (2);
eine Hauptabtriebswelle (21);
wobei die erste Abtriebswelle (26) der Gasturbine (101) über das erste Getriebe (1), über die erste Kupplung (3) und über das zweite Getriebe (2) mit der Hauptabtriebswelle (21) verbunden ist.

7. Verbundtriebwerk (100) nach Anspruch 6, weiterhin aufweisend:
eine zweite Abtriebswelle (20);
eine zweite Kupplung (4);
wobei der Kolbenmotor (16) über die zweite Abtriebswelle (20) und über die zweite Kupplung (4) mit dem zweiten Getriebe (2) verbunden ist;
wobei das zweite Getriebe (2) mit der Hauptabtriebswelle (21) verbunden ist.

8. Verbundtriebwerk (100) nach einem der Ansprüche 6 oder 7, weiterhin aufweisend:
eine dritte Kupplung (5);
wobei eine für den Turbolader (102) verwendete Turbine (18) durch die dritte Kupplung (5) vom ersten Getriebe (1) getrennt werden kann.

9. Verbundtriebwerk (100) nach einem der vorhergehenden Ansprüche, weiterhin aufweisend:
eine Hochdruckturbine (303);
eine Niederdruckturbine (304);
einen Hochdruckverdichter (302);
einen Niederdruckverdichter (301);
wobei die Verdichter (301, 302) und Turbinen (303, 304) in der Gasturbine (101) seriell geschaltet sind;
wobei die Hochdruckturbine (303) und der Hochdruck-Verdichter (302) Teil des Turboladers (102) sind;
wobei die Niederdruckturbine (304) und der Niederdruckverdichter (301) kein Teil des Turboladers (102) sind.

10. Verbundtriebwerk (100) nach einem der Ansprüche 1 bis 5 oder 9, weiterhin aufweisend:
einen ersten Generator (501);
einen zweiten Generator (502);
einen Leistungsregler (503);
wobei die erste Abtriebswelle (26) der Gasturbine (101) mit dem ersten Generator (501) über den Leistungsregler (503) mit einem Verbrauchemetz verbunden ist und
wobei die zweite Abtriebswelle (20) des Kolbenmotors (16) mit dem zweiten Generator (502) über den Leistungsregler (503) mit einem Verbrauchernetz verbunden ist.

11. Verwendung eines Verbundtriebwerks (100) nach einem der Ansprüche 1 bis 10 in einem Transportmittel.

12. Transportmittel mit einem Verbundtriebwerk (100) nach einem der Ansprüche 1 bis 10,
wobei es sich bei dem Transportmittel um ein Flugzeug (800), einen Helikopter (900), einen Senkrechtstarter oder ein Wasserfahrzeug handelt.

13. Verfahren zum Antreiben eines Transportmittels mit einem Verbundtriebwerk, aufweisend die folgenden Schritte:
Antrieb des Transportmittels lediglich mit zumindest einer Gasturbine (101) mit mindestens einem Verdichter (11, 12) und mindestens einer Turbine (17, 18);
Umschalten vom Antrieb des Transportmittels lediglich mit der Gasturbine (101) auf einen Antrieb des Transportmittels lediglich mit einem Kolbenmotor (16),
beispielsweise einem Dieselmotor (16);
Antrieb des Transportmittels lediglich mit dem Kolbenmotor (16), wobei in einem Dauerlastbetrieb das Transportmittel lediglich über den Kolbenmotor betrieben wird und der Kolbenmotor wahlweise alleine oder mit einem Verdichter (12) und einer Turbine (18) der Gasturbine (101) als Turbolader für den Kolbenmotor (102) genutzt wird.

14. Verfahren zum Antreiben eines Transportmittels mit einem Verbundtriebwerk, aufweisend die folgenden Schritte:
Antrieb des Transportmittels lediglich mit einem Kolbenmotor (16), beispielsweise einem Dieselmotor (16), wobei in einem Dauerlastbetrieb das Transportmittel lediglich über den Kolbenmotor betrieben wird und der Kolbenmotor wahlweise alleine oder mit einem Verdichter (12) und einer Turbine (18) einer Gasturbine (101) als Turbolader (102) für den Kolbenmotor genutzt wird;
Umschalten vom Antrieb des Transportmittels lediglich mit dem Kolbenmotor (16) auf einen Antrieb des Transportmittels lediglich mit der Gasturbine (101);
Antrieb des Transportmittels lediglich mit der Gasturbine (101).

## Claims

1. A compound engine (100), operable as a drive for a means oftransport, the compound engine comprising:
a piston engine (16), for example a diesel engine (16),
a gas turbine (101) with at least one compressor (11, 12) and with at least one turbine (17, 18),
wherein the piston engine (16) and the gas turbine (101) are interconnected in such a manner that during continuous duty operation the compound engine is only operated by way of the piston engine, and the piston engine is optionally operated on its own or together with a compressor (12) and a turbine (18) of the gas turbine as a turbocharger (102) for the piston engine (16),
wherein the compound engine can be operated by way of the piston engine (16) or the gas turbine (101).

2. The compound engine (100) according to claim 1,
wherein the gas turbine (101) comprises two separate compressors (11, 12) and two turbines (17, 18).

3. The compound engine (100) according to claim 2, further comprising:
a shared combustion chamber (13) for the two turbines (17, 18).

4. The compound engine (100) according to any one of the preceding claims, wherein during peak load operation the compound engine (100) is operated only by way of the gas turbine (101), or the piston engine (16) operates as well as a naturally aspirated engine or a charged engine.

5. The compound engine (100) according to any one of the preceding claims, wherein the compound engine (100) comprises a shutoff valve (7, 8, 9) for regulating the fresh air supply, for regulating the gas supply to the combustion chamber, or for regulating the gas supply to one of the turbines (17, 18);
wherein the shutoff valve (7, 8, 9) is open during peak load operation, and in continuous duty operation makes it possible to operate only that turbine (18) that is used as a turbocharger (102) for the piston engine (16).

6. The compound engine (100) according to any one of the preceding claims, further comprising:
a first driven shaft (26);
a first clutch (3);
a first transmission (1);
a second transmission (2);
a main driven shaft (21);
wherein the first driven shaft (26) of the gas turbine (101) is connected to the main driven shaft (21) by way of the first transmission (1), by way of the first clutch (3) and by way of the second transmission (2).

7. The compound engine (100) according to claim 6, further comprising:
a second driven shaft (20);
a second clutch (4);
wherein the piston engine (16) is connected to the second transmission (2)
by way of the second driven shaft (20) and by way of the second clutch (4);
wherein the second transmission (2) is connected to the main driven shaft (21).

8. The compound engine (100) according to one of claims 6 or 7, further comprising:
a third clutch (5);
wherein a turbine (18) that is used for the turbocharger (102) can be
separated from the first transmission (1) by means of the third clutch (5).

9. The compound engine (100) according to any one of the preceding claims, further comprising:
a high-pressure turbine (303);
a low-pressure turbine (304);
a high-pressure compressor (302);
a low-pressure compressor (301);
wherein the compressors (301, 302) and turbines (303, 304) are serially connected in the gas turbine (101);
wherein the high-pressure turbine (303) and the high-pressure compressor (302) form part of the turbocharger (102);
wherein the low-pressure turbine (304) and the low-pressure compressor (301) do not form part of the turbocharger (102).

10. The compound engine (100) according to any one of claims 1 to 5 or 9, further comprising:
a first generator (501);
a second generator (502);
an output regulator (503);
wherein the first driven shaft (26) of the gas turbine (101) with the first generator (501) is connected to a consumer network by way of the output regulator (503), and
wherein the second driven shaft (20) of the piston engine (16) with the second generator (502) is connected to a consumer network by way of the output regulator (503).

11. Use of a compound engine (100) according to any one of claims 1 to 10 in a means of transport.

12. A means of transport comprising a compound engine (100) according to any one of claims 1 to 10,
wherein the means of transport is an aircraft (800), a helicopter (900), a vertical takeoff aircraft or a water craft.

13. A method for driving a means of transport with a compound engine, comprising the following steps:
driving the means of transport with at least one gas turbine (101) with at least one compressor (11, 12) and at least one turbine (17, 18);
switching driving the means of transport only by means of the gas turbine (101) to driving the means of transport only by means of a piston engine (16), for example a diesel engine (16);
driving the means of transport only by means of the piston engine (16), wherein in a continuous duty operation the means of transport is operated only by way of the piston engine, and the piston engine is optionally utilized on its own or with a compressor (12) and a turbine (18) of the gas turbine (101) as a turbocharger for the piston engine (102).

14. A method for driving a means of transport with a compound engine,
comprising the following steps:
driving the means of transport by means of a piston engine (16), for example a diesel engine (16), wherein in a continuous duty operation the means of transport is only operated by way of the piston engine, and the piston engine is optionally utilized on its own or with a compressor (12) and a turbine (18) of a gas turbine (101) as a turbocharger (102) for the piston engine;
switching from driving the means of transport by means of the piston engine (16) to driving the means of transport by means of the gas turbine (101);
driving the means of transport by means of at least the gas turbine (101).

## Revendications

1. Groupe motopropulseur compound (100), exploitable en tant qu'entraînement pour un moyen de transport, le groupe motopropulseur compound comprenant :
un moteur à piston (16), par exemple un moteur Diesel (16),
une turbine à gaz (101) avec au moins un compresseur (11, 12) et au moins une turbine (17, 18),
le moteur à piston (16) et la turbine à gaz (101) étant raccordés de telle sorte que, dans un régime de charge permanente, le groupe motopropulseur compound fonctionne uniquement par l'intermédiaire du moteur à piston et le moteur à piston fonctionne sélectivement seul ou avec un compresseur (12) et une turbine (18) de la turbine à gaz en tant que turbocompresseur (102) pour le moteur à piston (16),
le groupe motopropulseur compound étant exploitable par l'intermédiaire du moteur à piston (16) ou de la turbine à gaz (101).

2. Groupe motopropulseur compound (100) selon la revendication 1,
la turbine à gaz (101) présentant deux compresseurs séparés (11, 12) et deux turbines (17, 18).

3. Groupe motopropulseur compound (100) selon la revendication 2, comprenant en outre :
une chambre de combustion commune (13) pour les deux turbines (17, 18).

4. Groupe motopropulseur compound (100) selon l'une des revendications précédentes,
le groupe motopropulseur compound (100), dans un régime de charge de pointe, fonctionnant uniquement par l'intermédiaire de la turbine à gaz (101) ou le moteur à piston (16) tournant sous forme de moteur à aspiration ou de moteur à suralimentation.

5. Groupe motopropulseur compound (100) selon l'une des revendications précédentes,
le groupe motopropulseur compound (100) présentant un clapet anti-retour (7, 8, 9) pour régler l'arrivée d'air frais, l'arrivée de gaz dans la chambre de combustion ou l'arrivée de gaz dans l'une des turbines (17, 18) ;
le clapet anti-retour (7, 8, 9) étant ouvert en régime de charge de pointe et permettant en régime de charge permanente uniquement le fonctionnement de la turbine (18), qui sert de turbocompresseur (102) pour le moteur à piston (16).

6. Groupe motopropulseur compound (100) selon l'une des revendications précédentes, comprenant en outre :
un premier arbre de sortie (26) ;
un premier embrayage (3) ;
une première transmission (1) ;
une seconde transmission (2) ;
un arbre de sortie principal (21) ;
le premier arbre de sortie (26) de la turbine à gaz (101) étant raccordé à l'arbre de sortie principal (21) par l'intermédiaire de la première transmission (1), du premier embrayage (3) et de la seconde transmission (2).

7. Groupe motopropulseur compound (100) selon la revendication 6, comprenant en outre :
un second arbre de sortie (20) ;
un deuxième embrayage (4) ;
le moteur à piston (16) étant raccordé à la seconde transmission (2) par l'intermédiaire du second arbre de sortie (20) et du deuxième embrayage (4) ;
la seconde transmission (2) étant raccordée à l'arbre de sortie principal (21).

8. Groupe motopropulseur compound (100) selon l'une des revendications 6 et 7, comprenant en outre :
un troisième embrayage (5) ;
une turbine (18), utilisée pour le turbocompresseur (102), étant séparée de la première transmission (1) par le troisième embrayage (5).

9. Groupe motopropulseur compound (100) selon l'une des revendications précédentes, comprenant en outre :
une turbine haute pression (303) ;
une turbine basse pression (304) ;
un compresseur haute pression (302) ;
un compresseur basse pression (301) ;
les compresseurs (301, 302) et les turbines (303, 304) étant montés en série dans la turbine à gaz (101) ;
la turbine haute pression (303) et le compresseur à haute pression (302) faisant partie du turbocompresseur (102) ;
la turbine basse pression (304) et le compresseur à basse pression (301) ne faisant pas partie du turbocompresseur (102).

10. Groupe motopropulseur compound (100) selon l'une des revendications 1 à 5 ou 9, comprenant en outre :
un premier générateur (501) ;
un deuxième générateur (502) ;
un régulateur de puissance (503) ;
le premier arbre de sortie (26) de la turbine à gaz (101)étant, avec le premier générateur (501), raccordé à un réseau de consommateurs par l'intermédiaire du régulateur de puissance (503) et
le second arbre de sortie (20) du moteur à piston (16)étant, avec le second générateur (502), raccordé à un réseau de consommateurs par l'intermédiaire du régulateur de puissance (503).

11. Utilisation d'un groupe motopropulseur compound (100) selon l'une des revendications 1 à 10 dans un moyen de transport.

12. Moyen de transport avec un groupe motopropulseur compound (100) selon l'une des revendications 1 à 10,
le moyen de transport étant un avion (800), un hélicoptère (900), un avion à décollage et atterrissage verticaux ou un bateau.

13. Procédé d'entraînement d'un moyen de transport par un groupe motopropulseur compound, comprenant les étapes suivantes :
entraînement du moyen de transport uniquement par au moins une turbine à gaz (101) avec au moins un compresseur (11, 12) et au moins une turbine (17, 18) ;
commutation de l'entraînement du moyen de transport uniquement par la turbine à gaz (101) sur un entraînement du moyen de transport uniquement par un moteur à piston (16), par exemple un moteur Diesel (16) ;
entraînement du moyen de transport uniquement par le moteur à piston (16), le moyen de transport, dans un régime de charge permanente, fonctionnant uniquement par l'intermédiaire du moteur à piston et le moteur à piston étant utilisé sélectivement seul ou avec un compresseur (12) et une turbine (18) de la turbine à gaz (101) en tant que turbocompresseur pour le moteur à piston (102).

14. Procédé d'entraînement d'un moyen de transport par un groupe motopropulseur compound, comprenant les étapes suivantes :
entraînement du moyen de transport uniquement par un moteur à piston (16), par exemple un moteur Diesel (16), le moyen de transport, dans un régime de charge permanente, fonctionnant uniquement par l'intermédiaire du moteur à piston et le moteur à piston étant utilisé sélectivement seul ou avec un compresseur (12) et une turbine (18) d'une turbine à gaz (101) en tant que turbocompresseur (102) pour le moteur à piston ;
commutation de l'entraînement du moyen de transport uniquement par le moteur à piston (16) sur un entraînement du moyen de transport uniquement par la turbine à gaz (101) ;
entraînement du moyen de transport uniquement par la turbine à gaz (101).
